**Europäisches Patentamt**

**European Patent Office**

**Office européen des brevets**

(11) Publication number: **0 167 283**
**B1**

## (12) EUROPEAN PATENT SPECIFICATION

(45) Date of publication of patent specification: **16.08.89**

(21) Application number: **85303886.7**

(22) Date of filing: **03.06.85**

(51) Int. Cl.⁴: **B 60 C 15/024, B 60 C 15/06**

(54) Pneumatic tyres.

(30) Priority: **28.06.84 GB 8416529**

(43) Date of publication of application:
**08.01.86 Bulletin 86/02**

(45) Publication of the grant of the patent:
**16.08.89 Bulletin 89/33**

(84) Designated Contracting States:
**DE FR GB IT**

(56) References cited:
**EP-A-0 077 161**
**FR-A-1 404 543**
**FR-A-2 023 015**
**GB-A-1 480 917**
**GB-A-1 584 553**
**GB-A-2 026 957**
**US-A-4 019 551**

(73) Proprietor: **DUNLOP LIMITED**
**St. James's House 23-24 King Street**
**London SW1Y 6RA (GB)**

(72) Inventor: **Bramma, John Edwin Lewis**
**113 Church Lane Handsworth Wood**
**Birmingham (GB)**
Inventor: **Westwell, Peter David**
**1888 Coventry Road Sheldon**
**Birmingham B26 3HH (GB)**

(74) Representative: **Treves, Barry William et al**
**Dunlop Limited Group Patent Department**
**P.O.Box 504**
**Erdington Birmingham B24 9QH (GB)**

Courier Press, Leamington Spa, England.

# Description

This invention relates to pneumatic tyres and in particular to tyres having bead regions specially adapted to provide effective bead retention when used on a vehicle in a partially or fully deflated condition.

Tyres of this type are disclosed in UK Patent Specification No 1 584 533 in which the tyre comprises a tread portion, sidewalls and a pair of bead regions each containing a substantially inextensible annular reinforcement and being seated upon a bead seat one at each side of the wheel rim; the wheel rim including a tyre fitting well and being formed axially inward of and adjacent to at least one bead seat to provide a circumferentially extending groove which axially and radially locates at least the radially inward extremity or tip of an extended toe of the associated tyre bead region, the said toe comprising elastomeric material, extending lengthwise from the annular reinforcement to the tip in a direction radially and axially inward of the annular reinforcement, being flexible in a direction perpendicular to its length to allow tyre fitting and being substantially rigid in the direction of its length such that when an axially inward force at the tread portion is applied to the bead region by the tyre sidewall in the ground contacting portion of the tyre circumference, a substantially radially and axially outwardly directed force is generated at the annular reinforcement the generated force tightening the annular reinforcement and retaining the bead region.

The bead retention properties of tyres of this type are dependent on the rotating cam efficiency of the toe as it is rotated under the bead core and against the wheel rim. One attempt to improve this efficiency is described in UK Patent Publication No 2 026 958 which discloses a tyre comprising a carcass and a pair of bead regions each containing a substantially inextensible annular bead core, and having a bead seat, at least one of the bead regions being provided with an axially and radially inwardly projecting toe, which comprises elastomeric material, is flexible perpendicular to its length and substantially rigid in the direction of its length, said bead region further comprising an additional portion located generally radially outwards of the toe, between the tyre carcass and the axially inner surface of the tyre, and extending to a position radially outwards to a height of between 2 and 6 times the bead core cross-sectional diameter measured radially from the centre of the bead core cross-section, said additional portion comprising elastomeric material having a hardness in the range 70° to 96° Shore A and the provision of an abutment means formed as a hump on the axially inward face of the bead region of the tyre at the same radial height as the bead core which, on rotation of the bead region, abuts the wheel rim and adds to the cam locking effect. The hump may be made of hard rubber.

The present invention provides an alternative means of improving the effectiveness of the rotating cam bead locking system which does not require a hump on the axially inner surface of the tyre bead region.

According to the present invention a tyre comprises a carcass and a pair of bead regions each containing a substantially inextensible annular bead core, and having a bead seat, at least one of the bead regions being provided with an axially and radially inwardly projecting toe, which comprises elastomeric material, is flexible perpendicular to its length and substantially rigid in the direction of its length, said bead region further comprising an additional portion located generally radially outwards of the toe, between the tyre carcass and the axially inner surface of the tyre, and extending to a position radially outwards to a height of between 2 and 6 times the bead core cross-sectional diameter measured radially from the centre of the bead core cross-section, said additional portion comprising elastomeric material having a hardness in the range 70° to 90° Shore A, characterised in that the said additional portion comprises substantially all of the elastomeric material between the carcass and the axially inner surface of the tyre bead region.

Preferably the said additional portion extends generally radially outwardly to a height of 5.2 times the bead core cross-sectional diameter measured radially from the centre of the bead core cross-section.

The said additional portion of elastomeric material more preferably has a hardness in the range 80° to 96° Shore A and this may be achieved by a selection of compound or by the use of a filler.

The said additional portion of elastomeric material may be separated from the toe although it must be adjacent thereto or it may be integral therewith.

A chafer strip of reinforcement fabric may be provided at the outer surface of the said portion to provide a skin reinforcement for the additional portion and this chafer may be an extension of a chafer strip for the toe when fitted. Preferably the chafer strip extends radially outwards of the bead core centre for 2-6 times the bead core cross-section diameter.

As will be appreciated the present invention may be combined with that of UK Patent Specification No 2 026 958 by providing also a hump at the bead core height so that both inventions combine their effects on the bead retention. In contrast to the invention of UK Specification No 2 026 958 the present invention is thought to operate by means of the bending stiffness of the elongated portion of the elastomeric material having a hardness greater than 70° Shore A acting as a lever to link the resistance of the rising cam of the toe to rotation into the tyre bead region above the bead core and thus effectively increase the torsional rigidity of the assembly. This in turn increases the tension applied to the bead core as a continuous hoop.

Further aspects of the present invention will be apparent from the following description, by way of example only of one embodiment in conjunction with the attached diagrammatic drawings in which:-

Figure 1 is a cross-section of part of a tyre fitted to a wheel rim; and

Figure 2 is an enlarged cross-section of one bead of the tyre of Figure 1.

The tyre is a 180/65 R 340 TD radial tyre. That is to say it is a radial tyre having bead regions designed for a TD type wheel rim. The tyre comprises a radial ply carcass 1, a tread 2 reinforced by a breaker structure 3 and a pair of tyre bead regions 4. Each tyre bead region has a projecting toe 5 which extends radially and axially inwardly from an annular bead core 6, which in this case is a (1 x 2.2 mm + 1.4 mm) steel wire cable bead core. The carcass ply 1 is wrapped around the cable bead core 6 and extends radially outwards alongside a bead apex strip 7 in the usual way. The cable bead core is positioned in the bead region so that the compression under the bead core when the tyre is fitted to the TD wheel rim for which the tyre is intended is in the usual range of values.

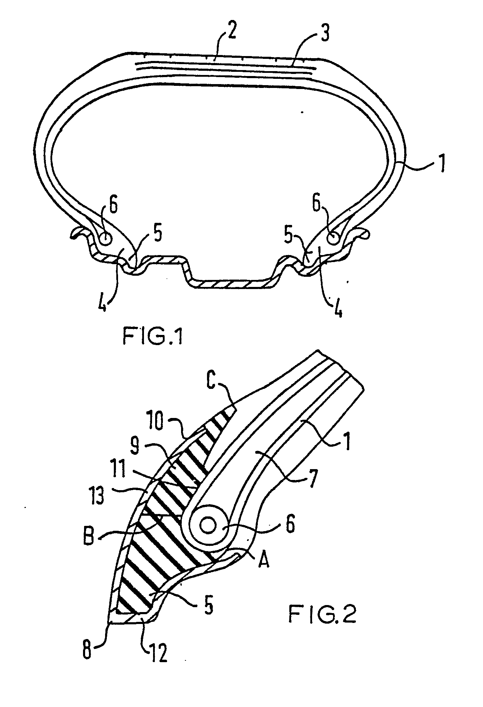

The projecting toe 5 has the usual TD cross-sectional shape as shown and in the region between the bead core 6 and the toe tip 8 is made of the usual hard rubber so that on rotation the toe acts as a cam to generate bead retaining tension in the bead core 6. The previously known region for the hard rubber is between the lines A and B in Figure 2, ie from beneath the bead core 6 to the level of the bead core on the inside of the tyre, but in this tyre the hard rubber is continued radially outwards along the axially inner side of the bead region to the point C which is in this tyre 26 mm above the centre line of the bead core. The radially outward continuation or strut 9 of hard rubber is sufficiently wide to fill the space between the axially inner surface 10 of the tyre and the axially inner surface 11 of the carcass ply 1. Finally a cross-woven chafer strip 12 which is laid around the bead seat and toe in the usual manner has an extended portion 13 which extends radially outwards almost to the point C as shown.

The resultant structure has the strut 9 extending beyond the 5 mm cross-sectional diameter cable bead core by a distance of 26 mm measured radially which provides a ratio of 26/5 = 5.2.

The hardness of the material of the strut, which is the same as the hardness of the toe material, is in this case 92° Shore A.

The chafer strip 12 is a cross-woven fabric available from Deering Miliken under the trade name of Takiwrap which is used untopped with rubber and cut at 45° bias. However other chafer strip fabrics may be used.

A tyre of the above specification was tested on a car in a fully deflated condition using the usual J turn dislodgement test and was found to be retained correctly on its wheel rim even at 45 m.p.h. (72 KPH). This made a distinct improvement over a second tyre having the strut 9 rubber replaced by the normal inner lining material of approximately 60° to 65° Shore A hardness which dislodged on the same car in the same J turn test at 25 m.p.h. (40 KPH).

The invention is applicable for TD tyres having all known bead core constructions and can be used with advantage in all TD tyres where rotation is used to generate bead core tensioning forces.

Materials other than the 92° Shore A hard material described may be used for the strut. Materials having a hardness value greater than 70° Shore A have been found to give improved bead retention.

**Claims**

1. A tyre comprising a carcass (1) and a pair of bead regions (4) each containing a substantially inextensible annular bead core (6), and having a bead seat, at least one of the bead regions (4) being provided with an axially and radially inwardly projecting toe (5), which comprises elastomeric material, is flexible perpendicular to its length and substantially rigid in the direction of its length, said bead region (4) further comprising an additional portion (9) located generally radially outwards of the toe (5), between the tyre carcass (1) and the axially inner surface of the tyre, and extending to a position (c) radially outwards to a height of between 2 and 6 times the bead core (6) cross-sectional diameter measured radially from the centre of the bead core cross-section, said additional portion (9) comprising elastomeric material having a hardness in the range 70° to 96° Shore A, characterised in that the said additional portion (9) comprises substantially all of the elastomeric material between the carcass (1) and the axially inner surface of the tyre bead region (4).

2. A tyre according to Claim 1 characterised in that said additional portion (9) extends generally radially outwards to a height of 5.2 times the bead core (6) cross-sectional diameter measured radially from the centre of the bead core cross-section.

3. A tyre according to any one of the preceding claims characterised in that the said additional portion (9) of elastomeric material has a hardness in the range 80° to 96° Shore A.

4. A tyre according to any one of the preceding claims characterised in that the said additional portion (9) is integral with the toe (5).

5. A tyre according to any one of the preceding claims characterised in that a chafer strip (13) of reinforcement fabric is provided at the axially inner surface of the bead region (4) and lies axially inwards of the said additional portion (9).

6. A tyre according to Claim 5 characterised in that the said chafer strip (13) extends around the toe (5).

7. A tyre according to Claim 6 characterised in that said chafer strip (13) extends to lie at the radially inner surface of the bead seat.

8. A tyre according to any one of Claims 5, 6 or 7 characterised in that the said chafer strip (12) extends along the tyre surface radially outwards of the bead core (6) centre for 2-6 times the bead core cross-sectional diameter.

**Patentansprüche**

1. Reifen, bestehend aus einer Karkasse (1) und einem Paar von Wulstbereichen (4), von denen jeder einen im wesentlichen undehnbaren, ringförmigen Wulstkern (6) enthält und einen Wulstsitz aufweist, wobei wenigstens einer der Wulstbereiche (4) mit einer axial und radial nach innen vorspringenden Zehe (5) versehen ist, die elastomeres Material enthält, flexibel senkrecht zu ihrer Länge und im wesentlichen steif in Richtung ihrer Länge ist, wobei der Wulstbereich (4) ferner ein Zusatzteil (9) enthält, das sich im allgemeinen radial außerhalb der Zehe (5), zwischen der Reifen-Karkasse (1) und der axial inneren Oberfläche des Reifens befindet und sich radial nach außen bis zu einer Position (C), auf eine Höhe vom zwischen 2- und 6-fachen des Querschnittdurchmessers des Wulstkernes (6), radial gemessen ab dem Zentrum des Wulstkernquerschnittes, erstreckt, und wobei das Zusatzteil (9) elastomeres Material mit einer Härte im Bereich von 70° bis 96° Shore A enthält, dadurch gekennzeichnet, daß das Zusatzteil (9) im wesentlichen das ganze elastomere Material zwischen der Karkasse (1) und der axial inneren Oberfläche des Reifen-Wulstbereiches (4) umfaßt.

2. Reifen nach Anspruch 1, dadurch gekennzeichnet, daß sich das Zusatzteil (9) im allgemeinen radial nach außen bis zu einer Höhe vom 5,2-fachen des Querschnittdurchmessers des Wulstkernes (6), radial gemessen ab dem Zentrum des Wulstkernquerschnittes, erstreckt.

3. Reifen nach einem der vorhergehenden Ansprüche, dadurch gekennzeichnet, daß das Zusatzteil (9) aus elastomerem Material eine Härte im Bereich von 80° bis 96° Shore A aufweist.

4. Reifen nach einem der vorhergehenden Ansprüche, dadurch gekennzeichnet, daß das Zusatzteil (9) integral mit der Zehe (5) ausgebildet ist.

5. Reifen nach einem der vorhergehenden Ansprüche, dadurch gekennzeichnet, daß sich ein Abriebschutzstreifen (13) aus Verstärkungsgewebe an der axial inneren Oberfläche des Wulstbereiches (4) befindet und axial innerhalb des Zusatzteiles (9) liegt.

6. Reifen nach Anspruch 5, dadurch gekennzeichnet, daß sich der Abriebschutzstreifen (13) um die Zehe (5) herum erstreckt.

7. Reifen nach Anspruch 6, dadurch gekennzeichnet, daß sich der Abriebschutzstreifen (13) anliegend an der radial inneren Oberfläche des Wulstsitzes erstreckt.

8. Reifen nach einem der Ansprüche 5, 6 oder 7, dadurch gekennzeichnet, daß sich der Abriebschutzstreifen (12) längs der Reifenoberfläche, vom Zentrum des Wulstkernes radial nach außen für 2-6 mal den Wulstkernquerschnittdurchmesser, erstreckt.

**Revendications**

1. Un pneumatique comprenant une carcasse (1) et deux zones de talons (4) contenant chacune une tringle (6) annulaire et sensiblement inextensible, et comportant un siège de talon (4), aumoins une des zones de talons étant pourvue d'un rebord (5) faisant saillie axialement et radialement vers l'intérieur, qui est constitué d'une matière élastomère, qui est flexible perpendiculairement à sa longueur et sensiblement rigide dans la direction de sa longueur, ladite zone de talon (4) comprenant en outre une partie additionnelle (9) située dans l'ensemble radialement vers l'extérieur dudit rebord (5), entre la carcasse du pneumatique (15) et la surface axialement intérieure du pneumatique, et s'étendant jusque dans une position (c) située radialement vers l'extérieur à une hauteur comprise entre 2 et 6 fois le diamètre de section droite de la tringle de talon, mesuré radialement à partir du centre de la section droite de la tringle de talon (6), ladite partie additionnelle (9) étant formée d'un matériau élastomère ayant une dureté rentrant dans la plage comprise entre 70° et 90° Shore A, caractérisé en ce que ladite partie additionnelle (9) comprend sensiblement tout le matériau élastomère compris entre la carcasse (1) et la surface axialement intérieure de la zone de talon (4) du pneumatique.

2. Un pneumatique selon la revendication 1, caractérisé en ce que ladite partie additionnelle (9) s'étend dans l'ensemble radialement vers l'extérieur jusqu'à une hauteur de 5,2 fois le diamètre de section droite de la tringle de talon (6), mesuré radialement à partir du centre de la section droite de la tringle de talon.

3. Un pneumatique selon une quelconque des revendications précédentes, caractérisé en ce que ladite partie additionnelle (9) en matériau élastomère a une dureté rentrant dans la plage comprise entre 80° et 96° Shore A.

4. Un pneumatique selon une quelconque des revendications précédentes, caractérisé en ce que ladite partie additionnelle (9) est unitaire avec le rebord (5).

5. Un pneumatique selon une quelconque des revendications précédentes, caractérisé en ce qu'une bande de revêtement (13) en tissu de renforcement est disposée sur la surface axialement intérieure de la zone de talon (4) et est située axialement vers l'intérieur de ladite partie additionnelle (9).

6. Un pneumatique selon la revendication 5, caractérisé en ce que ladite bande de revêtement (13) s'étend autour du rebord (5).

7. Un pneumatique selon la revendication 6, caractérisé en ce que ladite bande de revêtement (13) est disposée de façon à être située sur la surface radialement intérieure du siège de talon.

8. Un pneumatique selon une quelconque des revendications 5, 6 ou 7, caractérisé en ce que ladite bande de revêtement (12) s'étend le long de la surface du pneumatique, radialement vers l'extérieur du centre de la tringle de talon (6) sur 2 à 6 fois le diamètre de section droite de la tringle de talon.

EP 0 167 283 B1

FIG.1

FIG.2